# EUROPEAN PATENT SPECIFICATION

(11) **EP 0 490 960 B1**
(45) Date of publication and mention of the grant of the patent: **29.06.1994**
(21) Application number: 90913560.0
(22) Date of filing: 04.09.1990
(51) Int. Cl.: F24F 12/00, F24F 3/16

(54) **FILTERING UNIT FOR CLEANING SUPPLY AIR**
FILTEREINHEIT ZUR REINIGUNG DER LUFTZUFUHR
UNITE DE FILTRAGE DESTINEE A NETTOYER DE L'AIR D'ALIMENTATION

(30) Priority: 06.09.1989 SE 8902928
(43) Date of publication of application: 24.06.1992
(73) Proprietor: AIRCHITECT I SÖDERHAMN AB, S-826 00 Söderhamn (SE)
(72) Inventor: KRANTZ, Anders, S-826 06 Söderala (SE)
(74) Representative: Rostovanyi, Peter
(86) International application number: SE9000562
(87) International publication number: WO9103689

(56) References cited:
- DE-C- 620 499
- FR-A- 2 353 326
- SE-B- 444 852
- US-A- 1 535 819
- US-A- 2 761 526
- US-A- 4 377 400
- Patent Abstracts of Japan, vol. 11, No. 388, M652, abstracts of JP 62-155494, publ. 1987-07-10 MIURA CO. LTD.

## Description

This invention relates to a filtering unit for cleaning supply air, according to the preamble of claim 1.

Filtering units of the type mentioned above exist in ventilation or air treatment plants supplying different premises in large or medium-size buildings with clean air brought to a suitable temperature, the filtering unit serving to clean the outdoor air supplied before it is distributed to the different premises of the building. In addition, these ventilation plants also include some type of heat exchanger disposed at a suitable point in the air supply mains, often in the vicinity of the filtering unit, but always at a certain distance from it. However, such heat exchangers, recovering some of the heat content of the exhaust air which is eventually evacuated from the building, involve high costs and require substantial space since they must be accommodated in special housings.

US-A-1 535 819 also describes a similar type of unit but which is mainly concerned with separating condensate from the air.

The present invention aims at eliminating the need for separate heat exchangers in ventilation plants of the above-mentioned type by providing a filtering unit integrating a heat-exchanging function. According to the invention, this is achieved by means of a filtering unit having the features recited in claim 1.

In order to ensure the desired heat-exchanger function, it is sufficient according to the invention to mount in the compulsory filter housing casings which enclose the individual filter bodies. In practical use, these casings may advantageously be made from cylindrical tubes of thin sheet-metal which are very cheap to manufacture. This means that the desired heat-exchanger function can be achieved at a cost which is many times below the cost for using separate heat-exchanger units, and that the need for a space for special heat-exchanger housings is overcome.

In the drawings,
- FIG. 1: is a schematic perspective view of a filtering unit according to the invention,
- Fig. 2: is a longitudinal section of the unit in Fig. 1,
- Fig. 3: is a cross-section of the unit in Fig. 1,
- Fig. 4: is an exploded view illustrating how a filter body is mounted in an end wall of the filter housing,
- Fig. 5: is an enlarged schematic longitudinal view of a casing showing an alternative embodiment in which two filter bodies are mounted in each casing, and
- Fig. 6: is a similar longitudinal view showing a further alternative embodiment in which the casing is detachably mounted in the filter housing.

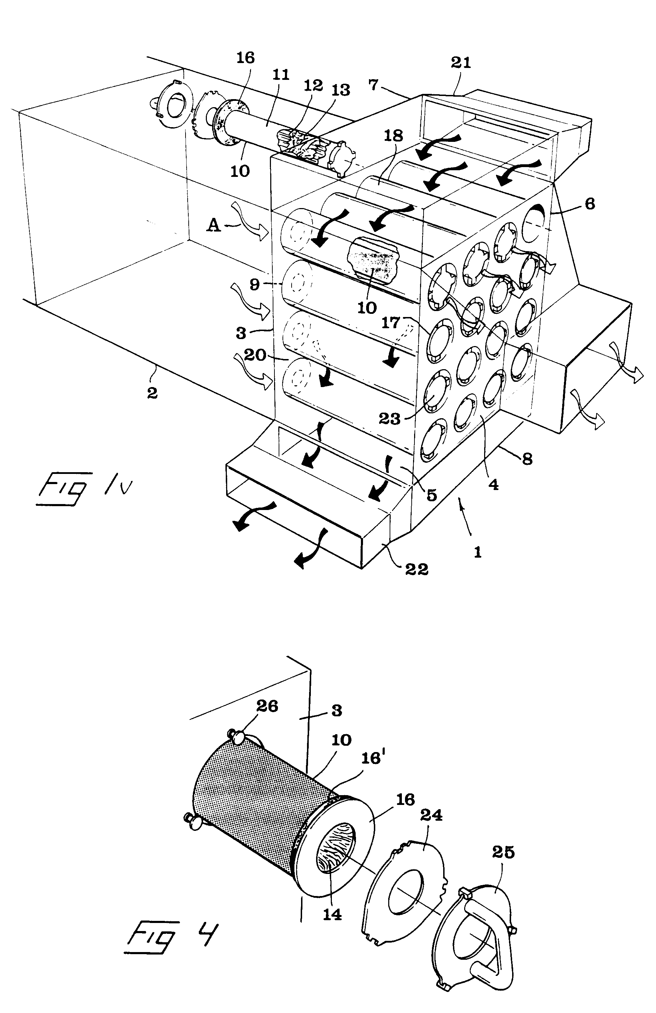

In the drawings, a filter housing generally designated 1 is integrated in or forms a part of an air supply main 2 for supplying outdoor air to different premises of a building. The supply air passes through the main 2 in the direction of the arrows A, i.e. from the left to the right in Figs. 1 and 2. In the schematically illustrated embodiment, the housing 1 has two end walls 3, 4, two side walls 5, 6, a top cover 7 and a bottom 8. The front end wall 3 has a plurality of openings 9 which serve as inlets for the incoming air and in which are mounted in known manner a number of filters generally designated 10. These filters, which may advantageously be designed in the manner described in SE-A-435 455, consist of hollow, here cylindrical, bodies through which the supply air can flow in a direction from the interior and outwards. More specifically, the filter bodies have a cylindrical wall made up of two different layers, namely an outer fine-filter layer 11, e.g. of paper having a fine pore structure, and an inner layer 12, e.g. of more rigid paper having a coarser pore structure. Within the coarser filter layer 12, there may be provided a bundle of strips 13 having a prefiltering function. At its front end, the thus designed cylinder or tube has an opening 14 (see Fig. 4) through which air can flow into the interior of the tube. At its rear end, the tube is however closed by means of an end wall 15 (see Fig. 2). Air flowing into the filter tube is thus forced to pass through the two filter layers 12, 11 in a direction from the interior and outwards. At its front open end, the filter tube is also provided with a flange 16 which can be applied to the front end wall 3 of the filter housing 1 and sealingly joined to the end wall in any suitable manner, for instance by means of a sealing ring 16' of rubber. Air that has passed through the respective filter leaves the housing through outlet openings 17 in the rear end wall 4 of the housing.

According to the invention, the filter bodies 10 are each mounted in casings 18 having larger dimensions than the filter bodies so as to define, between the inner sides of the casings 18 and the outer sides of the filter bodies 10, gaps 19 through which the cleaned supply air leaving the filter bodies can flow during its passage towards the outlets 17. The casings 18 define, together with the walls 3, 4, 5, 6, the top cover 7 and the bottom 8, a passage 20 which is isolated from the supply air and through which exhaust air having a higher temperature than the supply air can flow for preheating the supply air. In the illustrated embodiment, the warm exhaust air is fed into the passage 20 through an inlet 21 and leaves through an outlet 22. In this embodiment, not only the individual filter body 10, but also the individual casing 18 has a substantially cylindrical shape, the casing 18 having a diameter which suitably is 1.3-1.7 times greater than the diameter of the filter body 10. Thus, the annular gap 19 defined between the casing and the filter body will have a cross-sectional area which is substantially equal to the cross-sectional area of the filter body, which means that the air can flow through the gap without any appreciable pressure drop therein.

In practice, the filter bodies and the casings may have approximately the same length, the filter body having a length which is many times, e.g. 5-10 times, greater than its diameter. In practical use, the filter bodies may thus have a diameter of 50-200 mm and a length of 250-1500 mm. When mounted in the casings, the filter bodies should be maintained concentric with the casing. This can be achieved in many different ways. In the illustrated embodiment, use is made of fixed holders 23 mounted at the outlets 17 in the rear end wall 4. The holder 23 may consist e.g. of a plate which has approximately the same diameter as the filter body and from the periphery of which project conically inclined radial fingers fixed to the end wall 4. When the filter body is inserted in its casing, the closed end of the filter will be automatically guided into a centered position determined by the conical fingers, as the flange 16 is applied and fixed to the front end wall 3. The centered position of the filter body can also be obtained by means of radial projections arranged on the outer side of the rear end portion of the filter body. It is also conceivable to rely only on the tightening device, known per se, which is shown in Fig. 4 and consists of a ring 24 applicable with the aid of a tool 25 against a number of pins 26 on the end wall 3 so as to urge the flange 16 of the filter against the end wall 3 to a position in which the filter is maintained fixed and concentric with respect to the tube casing 18.

As indicated by the arrows B in Fig. 3, the inlet 21 for the warm exhaust air is assumed to be disposed at the very top of the housing 1 while the outlet 22 is disposed at the bottom of the housing, more precisely in a position diametrically opposed to the inlet 21.

It goes without saying that each of the casings or tubes 18 is sealingly connected at its opposite ends to the end walls of the housing, more precisely at the openings 9 and 17 in the end walls 3, 4, respectively. This sealing connection can be realised by welding or by means of riveted flange joints. The tube or casing 18 is suitably made from a thin gas-impermeable material, such as thin sheet-metal, of a thickness of e.g. 0.5-1.0 mm. It is however also possible to use other materials, such as plastic, or even paper or other fibre materials which need not necessarily be completely gas-impermeable. A certain gas or air leakage may thus exist between the passage 20 and the interior of the tubes 18 without adversely affecting the quality of the supply air.

The filtering unit described above operates in the following way. The outdoor air supplied is caused to pass through the filtering unit via the individual filter bodies 10, more precisely by causing the air to enter through the openings 14 and pass through the filter layers 12, 11 in a direction from the interior and outwards, into the gaps 19 and finally out through the outlets 17 in the rear end wall of the filter housing. Simultaneously, exhaust air which is warmer than the incoming supply air is conducted through the passage 20 from the inlet 21 to the outlet 22. In this manner, the exhaust air will flow around the different tubes or casings 18 in the housing 1 while transferring part of its heat content through the tube walls to the supply air flowing inside the tubes. Thus, the supply air will be subjected to preheating the intensity of which can be optimised by suitably adjusting the velocity of the two mutually isolated air flows, the pressure drop in the filter bodies and in the passage 20, etc.

In the illustrated embodiment, the casings 18 consist of simple, thin tubes of sheet-metal. These tubes can of course be modified in many different ways to improve the heat transfer to the interior of the tubes, for instance by arranging flanges or fins, e.g. longitudinal, radially projecting ones. Such flanges or fins would also increase the tendency to turbulence or whirling in the flow of exhaust air passing by, whereby to further intensify the heat transfer. It is also conceivable to bring about such a turbulent flow otherwise, e.g. by mounting special baffles or whirl-producing elements in the passage 20. To increase the turbulence in the exhaust air flow through the passage 20, it would also be possible to partition this passage by means of one or more perforated plates or netting, for instance between each set of horizontally juxtaposed casings 18.

Although the inventive filtering unit has been described above for heating the supply air entering through the filters 10, it is conceivable per se to use the filtering unit also for cooling the supply air. To this end, cold water is advantageously flushed on the casings 18. This can be done e.g. for cooling outdoor air supplied during the hot season. Depending on the climate where the filtering unit is used, this air can have a temperature of 25-50°C or even more. By cooling the casings 18, e.g. by pouring water on them, the supply air can be cooled to a temperature of 20-25°C by the transfer of heat from the supply air to the exhaust air in the passage 20. This makes the inventive filtering unit versatile since it can be used during the cold season for preheating incoming cold supply air and thereafter during the hot season - without any extensive modification of the design - for cooling warm or hot supply air.

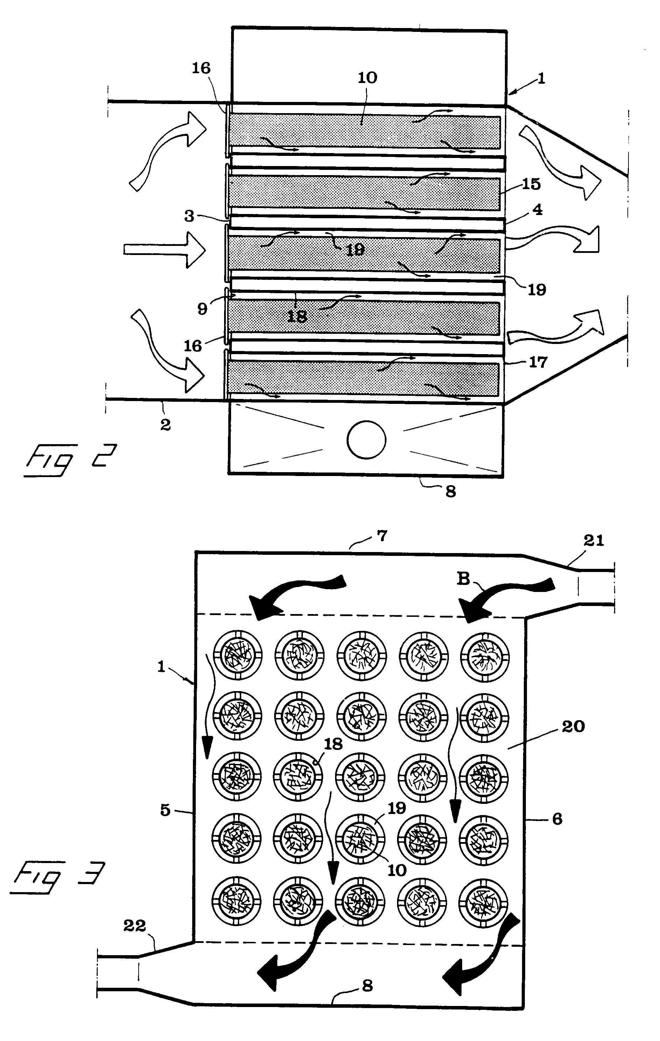

Reference is now made to Fig. 5 illustrating an alternative embodiment in which each individual casing 18' accommodates two filter bodies 10', 10'', namely a first filter body 10' for filtering or separating solid constituents from the supply air and a second filter body 10'' for separating gaseous pollutants from the supply air. Thus, the first filter body 10' may be of exactly the same type as that in Figs. 1-4, i.e. having an outer fine-filter layer and an inner coarse-filter layer housing a bundle of strips. The second filter body 10'', however, is modified so as to include a suitable agent capable of adsorbing and/or absorbing gaseous pollutants. In practice, this agent may be e.g. active carbon or the agent which is commercially available under the trade name PURAFIL®. Also the second filter body 10'' is advantageously cylindrical and hollow, although it is intended to be traversed by the supply air in a direction from outside and inwards. The adsorbent or absorbent 28 now mentioned may then be arranged between inner and outer cylindrical walls 29, 30 which consist e.g. of paper, perforated sheet-metal or the like, and extend between a closed bottom 31 and an annular flange 32 having a central opening 33. In the embodiment shown in Fig. 5, the outdoor air supplied is caused, in a first step, to pass through the filter body 10' in a direction from the interior and outwards so that solid constituents, such as dust, soot and the like, are separated in the filter before the air emerges into the gap 19. The air, now cleaned of solid constituents, then passes from the gap 19 through the filter body 10'' in a direction from outside and inwards to be eventually evacuated through the opening of the flange 32. The air is forced to do so by the flange 32 sealingly engaging the rear end wall 4 of the filter housing. When the air passes through the layer 28, e.g. of PURAFIL®, it is cleaned also of gaseous pollutants, such as carbon monoxide in car exhaust emissions.

The embodiment shown in Fig. 5 also offers the advantage of the gas filters 10' having a sound-damping effect on the flow of supply air passing through the housing. In certain applications, gas filtering of the air is not necessary. In these cases, the filtering unit of Fig. 5 can be used advantageously by replacing the gas filters with special sound-damping bodies (not shown). In practice, these sound-damping bodies, having no actual gas-cleaning function, may consist of cylindrical, flanged tubes of netting coated on their outer sides with a fibrous or porous material, such as foam rubber, having sound-absorbing properties.

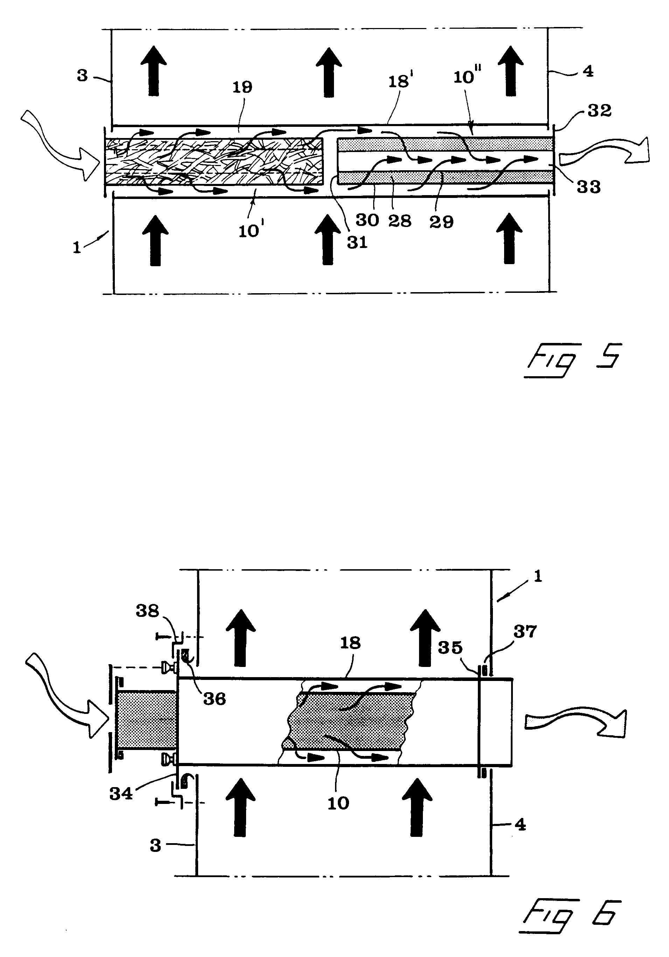

Fig. 6 shows another alternative embodiment in which the tube or casing 18 is detachably mounted in the filter housing. This can be realised, for instance by providing the tube with a first fixed flange 34 at one end and with a second fixed flange 35 at the other end, the diameter of the latter flange being slightly smaller than that of the opening 9 in the end wall 3, while the diameter of the flange 34 is slightly greater than that of said opening. Between each of the flanges 34, 35 and the associated end wall 3 and 4, respectively, there is provided a sealing ring 36, 37, e.g. of rubber. By tightening a clamping ring 38 against the flange 34, the sealing rings 36, 37 are pressed against the associated wall, thus forming gas-tight joints between the tubes and the end walls. Since the casings or tubes 18 thus are dismountable, they can be readily removed from the housing, e.g. for inspection and/or replacement. In this context, it should also be pointed out that the tubes 18, whether they are fixedly or detachably mounted in the filter housing, may consist of acidproof sheet-metal if the outdoor air supplied is particularly aggressive.

In a special embodiment of the invention, it is conceivable to provide in the passage 20 one or more nozzles through which a liquid, such as water, can be sprayed on the outer sides of the tubular casings 18. Such liquid spraying can be used for different purposes, e.g. for increasing the heat-transferring effect through the tubular walls by keeping these clean or for cooling the supply air, as described above. The spraying liquid may be either recycled in a closed pipe system or drained through the bottom of the housing into the sewerage.

It is possible to modify the geometric configuration of the housing 1 in many different ways. For a low or flat design of the housing, it is thus possible to completely dispense with the side walls 5, 6, in which case the exhaust air will enter the filtering unit at one side of the set or array of tubes 18 and exit at the opposite side. Further, the cylindrical shape of the filter bodies and of the casings 18 is not compulsory although it is preferred in practical use. Thus, both the filter bodies and the casings may have a cross-sectional shape other than a circular one, it being even conceivable to design them with different cross-sectional shapes. Although the invention is described, both in the foregoing and in the accompanying claims, in connection with the treatment of air, it is understood that it is also applicable to gaseous media other than air. When cold air is supplied from outside and conducted through the filter housing, liquid condensate is formed on the outside of the heat-transferring tubes 18, with the additional risk of frost or ice forming thereon, namely if the air is extremely cold (e.g. below -20°C). To obviate the risk of ice formation, if required, it is possible for instance to arrange heating elements on the outside of the tubes, such as wires or cables, by means of which the tubes can be maintained heated. Such heating elements can also be arranged otherwise in the passage 20, e.g. on perforated plates or air-deflecting baffles, if any.

If should also be pointed out that the air passing through the filter tubes or filter bodies 10 can flow in an inward-outward direction therethrough as well as in an outward-inward direction, which means that a filter housing of the inventive type can be provided with only the type of absorption filters 10'' shown in Fig. 5, while dispensing with the type of particle-separating filters 10, 10' used in the embodiment according to Figs. 1-4 and in the embodiment according to Fig. 5. It should however be emphasised that the embodiment according to Fig. 5 is particularly advantageous since it performs, in one and the same filter housing or filtering unit, three simultaneous functions, namely particle separation, gas cleaning and preheating.

## Claims

1. A filtering unit for cleaning supply air intended for the provision of building premises with clean, tempered air, comprising a set of filters accomodated in a housing (1) and having the form of hollow bodies (10) through which supply air can flow when passing from an inlet (9) to an outlet (17) of said housing at separate ends thereof, **characterised** in that casings (18) are provided in the filter housing, said filter bodies (10) are mounted in said casings and said casings having larger dimensions than the filter bodies so as to define between the inner side of each casing (18) and the outer side of each filter body (10) an angular gap (19) through which the supply air can flow when passing towards the outlet (17), and that each casing (18) is sealingly connected at opposite ends to openings (9, 17) in two spaced-apart end walls (3, 4) of the filter housing, said end walls defining, together with said casings and at least one top cover (7) and one bottom (8), a passage (20) which is isolated from the supply air and through which air, e.g. exhaust air, having a different temperature than the supply air can flow for heating or cooling the supply air by heat transfer through the casings (18).

2. Filtering unit as claimed in claim 1, **characterised** in that the individual filter bodies (10) as well as the individual casings (18) have a cylindrical shape, the casings having a diameter which is 1.3-1.7 times greater than the diameter of the filter bodies (10) so as to give said annular gap (19) a cross-sectional area substantially equal to the cross-sectional area of the filter body (10).

3. Filtering unit as claimed in claim 1 or 2, **characterised** in that the individual casings (18) are detachably mounted in the housing (1) to permit being completely removed from the housing, e.g. for inspection purposes.

4. Filtering unit as claimed in claim 2 or 3, **characterised** in that the filter bodies (10), are mounted, in a concentric position with respect to the casing (18).

5. Filtering unit as claimed in any one of the preceding claims, **characterised** in that said passage (20), in addition to the top cover (7), the bottom (8) and the end walls (3, 4), is defined by two separate side walls (5, 6) extending at an angle to said end walls (3, 4) so as to form a six-sided housing having an inlet (21) and an outlet (22) for the air.

6. Filtering unit as claimed in claim 5, **characterised** in that said inlet and said outlet (21, 22) are disposed diametrically opposite each other, one at the top and the other at the bottom of the housing (1).

7. Filtering unit as claimed in any one of the preceding claims, **characterised** in that the casing (18) is made of a thin, gas-impermeable material, such as thin sheet-metal.

8. Filtering unit as claimed in any one of the preceding claims, **characterised** in that the individual casings (18) are adapted to receive two filter bodies (10', 10''), namely a first filter body (10') which is introduced in one end of the casing and designed for separating solid constituents and through which the supply air passes in a direction from the interior and out into the gap (19), and a second filter body (10'') which is introduced in the opposite end of the casing and designed for separating gaseous pollutants in the supply air and thorugh which the supply air passes in a direction from said gap (19) to the interior of said filter body from which it is finally evacuated through the opening (33) thereof.

## Patentansprüche

1. Zuluftreinigungs- und Filtereinheit zur Versorgung der Räume eines Gebäudes mit reiner, auf gleichmässige Temperatur gebrachter Luft, die einen in einem Gehäuse (1) untergebrachten Filtersatz umfasst, wobei die Filter die Form von Hohlkörpern (10) haben, durch welche Zuluft strömen kann, wenn sie von einem Einlass (9) zu einem Auslass (17) des Gehäuses an dessen getrennten Enden strömt, dadurch **gekennzeichnet**, dass Hülsen (18) im Filtergehäuse angeordnet sind, wobei die Filterkörper (10) in den genannten Hülsen angebracht sind, welche grössere Abmessungen haben als die Filterkörper, um zwischen der Innenseite jeder Hülse (18) und der Aussenseite jedes Filterkörpers (10) einen ringförmigen Spalt (19) abzugrenzen, durch welchen die sich auf den Auslass (17) zu bewegende Zuluft strömen kann, und dass jede Hülse (18) an entgegengesetzten Enden mit Öffnungen (9, 17) in zwei im Abstand voneinander liegenden Stirnwänden (3, 4) des Filtergehäuses dicht verbunden ist, wobei die Stirnwände zusammen mit den genannten Hülsen und zumindest einer Decke (7) und einem Boden (8) einen Durchlass (20) abgrenzen, der von der Zuluft isoliert ist und durch den Luft, z.B. Abluft, mit einer anderen Temperatur als die der Zuluft strömen kann, um durch Wärmeübergang durch die Hülsen (18) die Zuluft zu erwärmen oder zu kühlen.

2. Filtereinheit nach Anspruch 1, dadurch **gekennzeichnet**, dass die einzelnen Filterkörper (10) sowie die einzelnen Hülsen (18) eine zylindrische Form haben, wobei die Hülsen einen Durchmesser haben, der 1,3 - 1,7 mal grösser ist als der Durchmesser der Filterkörper (10), um dem genannten ringförmigen Spalt (9) eine Querschnittsfläche zu geben, die der Querschnittsfläche des Filterkörpers (10) im wesentlichen gleich ist.

3. Filtereinheit nach Anspruch 1 oder 2, dadurch **gekennzeichnet**, dass die einzelnen Hülsen (18) im Gehäuse (1) lösbar angebracht sind, um von dem Gehäuse vollständig entfernt werden zu können, beispielsweise zum Zweck der Besichtigung.

4. Filtereinheit nach Anspruch 2 oder 3, dadurch **gekennzeichnet**, dass die Filterkörper (10) in einer konzentrischen Position zu der Hülse (18) angebracht sind.

5. Filtereinheit nach einem der vorhergehenden Ansprüche, dadurch **gekennzeichnet**, dass der genannte Durchlass (20) ausser von der Decke (7), dem Boden (8) und den Stirnwänden (3, 4) von zwei getrennten Seitenwänden (5, 6) abgegrenzt ist, die sich im Winkel zu den genannten Stirnwänden (3, 4) erstrecken, um ein sechsseitiges Gehäuse zu bilden, das einen Einlass (21) und einen Auslass (22) für die Luft aufweist.

6. Filtereinheit nach Anspruch 5, dadurch **gekennzeichnet**, dass sich der Einlass und der Auslass (21, 22) diametral gegenübereinander befinden, der eine oben und der andere unten im Gehäuse (1).

7. Filtereinheit nach einem der vorhergehenden Ansprüche, dadurch **gekennzeichnet**, dass die Hülse aus einem dünnen, gasundurchlässigen Material, beispielsweise dünnem Blech, hergestellt ist.

8. Filtereinheit nach einem der vorhergehenden Ansprüche, dadurch **gekennzeichnet**, dass die einzelnen Hülsen (18) zur Aufnahme von zwei Filterkörpern (10', 10'') vorgesehen sind, und zwar einen ersten Filterkörper (10'), der in einem Ende der Hülse eingeführt und zum Abtrennen von festen Bestandteilen ausgebildet ist, und durch den die Zuluft von dem Inneren und in den Spalt (19) hinaus strömt, und einen zweiten Filterkörper (10''), der im entgegengesetzten Ende der Hülse eingeführt und zum Abtrennen von gasförmigen Schadstoffen in der Zuluft ausgebildet ist, und durch den die Zuluft von dem Spalt (19) in das Innere des Filterkörpers strömt, aus dem sie schliesslich durch dessen Öffnung (33) evakuiert wird.

## Revendications

1. Unité de filtrage destinée à nettoyer de l'air alimenté dans le but de fournir de l'air pur, tempéré à des bâtiments, comprenant un jeu de filtres prévus dans une boîte (1) et constitués par des corps creux (10) à travers lesquels peut passer de l'air alimenté en s'écoulant depuis une entrée (9) jusqu'à une sortie (17) de la boîte, qui sont prévues à des extrémités séparées de celle-ci, **caractérisée** en ce que des carters (18) sont prévus dans la boîte à filtres, lesdits corps de filtre (10) étant montés dans les carters ayant des dimensions supérieures à celles des corps de filtre de façon à définir, entre le côté intérieur de chaque carter (18) et le côté extérieur de chaque corps de filtre (10), un espace annulaire (19) à travers lequel peut passer l'air alimenté en s'écoulant vers la sortie (17), et en ce que chaque carter (18) à ses extrémités opposées est relié de façon étanche à des ouvertures (9, 17) pratiquées dans deux parois d'extrémité espacées (3, 4) de la boîte à filtres, lesdites parois d'extrémité délimitant, conjointement avec lesdits carters et au moins un couvercle (7) et un fond (8), un passage (20) qui est isolé de l'air alimenté et à travers lequel de l'air, par exemple de l'air évacué, ayant une température différente de celle de l'air alimenté peut s'écouler pour chauffer ou refroidir l'air alimenté par transfert thermique à travers les carters (18).

2. Unité de filtrage selon la revendication 1, **caractérisée** en ce que les corps de filtre (10) ainsi que les carters (18) sont de forme cylindrique, les carters ayant un diamètre 1,3-1,7 fois plus grand que celui des corps de filtre (10) de façon à donner audit espace annulaire (19) une superficie de la section transversale sensiblement égale à celle des corps de filtre (10).

3. Unité de filtrage selon la revendication 1 ou 2, **caractérisée** en ce que les carters (18) sont montés de façon amovible dans la boîte (1) pour pouvoir en être enlevés dans leur ensemble, par exemple lors d'une inspection.

4. Unité de filtrage selon la revendication 2 ou 3, **caractérisée** en ce que les corps de filtre (10) sont montés de façon concentrique par rapport aux carters (18).

5. Unité de filtrage selon l'une quelconque des revendications précédentes, **caractérisée** en ce que ledit passage (20) est délimité non seulement par le couvercle (7), le fond (8) et les parois d'extrémité (3, 4), mais aussi par deux parois latérales séparées (5, 6) faisant un angle avec les parois d'extrémité (3, 4) de façon à former une boîte hexagonale avec une entrée (21) et une sortie (22) pour l'air.

6. Unité de filtrage selon la revendication 5, **caractérisée** en ce que l'entrée et la sortie (21, 22) sont diamétralement opposées l'une à l'autre, l'une étant prévue au sommet et l'autre étant prévue au fond de la boîte (1).

7. Unité de filtrage selon l'une quelconque des revendications précédentes, **caractérisée** en ce que le carter (18) est fait d'un matériau mince, imperméable au gaz, tel que la tôle mince.

8. Unité de filtrage selon l'une quelconque des revendications précédentes, **caractérisée** en ce que les carters (18) sont prévus chacun pour recevoir deux corps de filtre (10', 10''), à savoir un premier corps de filtre (10') qui est introduit par une extrémité du carter et destiné à séparer des solides et à travers lequel l'air alimenté s'écoule dans un sens depuis l'intérieur dans l'espace (19), et un second corps de filtre (10'') qui est introduit par l'autre extrémité du carter et destiné à séparer des polluants gazeux de l'air alimenté et à travers lequel l'air alimenté s'écoule dans un sens depuis ledit espace (19) vers l'intérieur du corps de filtre d'où il est finalement évacué par l'ouverture (33).
